# EUROPEAN PATENT APPLICATION

(11) **EP 4 733 108 A1**
(43) Date of publication of application: **29.04.2026**
(21) Application number: 24208802.9
(22) Date of filing: 24.10.2024
(51) Int. Cl.: B60K 11/04

(54) **VEHICLE HEAT EXCHANGER ASSEMBLY**

(71) Applicant: Valeo Electrification, 95892 Cergy Pontoise (FR)
(72) Inventor: PAWLAK, Damian, 32 050 Skawina (PL); FAJKIS, Michal, 32 050 Skawina (PL); ALLATA, Sofiane, 32 050 Skawina (PL)
(74) Representative: Valeo Powertrain Systems

(57) **Abstract**

A heat exchanger assembly (100) comprises a first heat exchanger (10) that comprises first fastening members (12), two or more second heat exchangers (20) each including second fastening members (22). The second heat exchangers (20) are mechanically connected to the first heat exchanger (10) using the first fastening members (12) and the second fastening members (22). The first heat exchanger (10) is connected to and disposed between the two second heat exchangers (20). The two second heat exchangers (20) are in fluidic communication with each other using at least one fluid connector (30).

## Description

### TECHNICAL FIELD

The present invention relates to a heat exchanger module, particularly to a vehicle front end heat exchanger module comprising multiple heat exchangers.

### BACKGROUND OF THE INVENTION

Usually, radiators, which are essentially heat exchangers, are employed for conventional engine cooling system of a vehicle. A radiator uses a liquid coolant that circulates inside it and extracts the heat generated by the engine. A radiator is usually placed in the front most portion of the vehicle to allow oncoming ram airflow to cool the radiator, while a fan module is further used to suck more air over the radiator to improve the cooling effect of the radiator. Apart from the radiator, a gas-cooler (heat exchanger) is also disposed at the front-end of a vehicle to cool a gaseous working fluid such as a refrigerant. Usually the gas cooler is a condenser for cooling a refrigerant circulating in a HVAC cooling loop. The gas-cooler is located in front of the radiator and both the radiator and the gas-cooler are individually mounted to a frame that is in turn mounted to the vehicle chassis.

In modern vehicles, a single gas-cooler has become insufficient for the increasing cooling requirements. However, mounting two gas-coolers requires the two gas coolers to be connected to each other by a rigid fluid connector that can withstand the high fluid pressure (for example the high pressure of the refrigerant coming out of the compressor of an HVAC system). The connection needs to be a fluid-tight connection and should successfully withstand vibration issues.

Mounting the gas-coolers on the frame creates tolerance stack-up issues resulting in poor fitting of the fluid connector with the gas-coolers.

Further, such fitting issue of fluid connector with the gas coolers exacerbates the stresses developed in the fluid connector during vehicle vibrations that can result in the fracture or failure of the fluid connector.

### OBJECT OF THE INVENTION

It is an object of the invention to provide higher cooling capacity of a gas-cooler to meet higher cooling requirements of the vehicle.

Another object of the invention is, when two gas-coolers are employed, to provide a proper fitting fluid connector between two gas-coolers and minimizing tolerance stack-up issues.

Another object of the invention is to block all degrees of freedom of the gas-coolers with respect to each other, to eliminate any resulting vibration induced stresses developed in the fluid connector connecting the two gas-coolers.

Yet another objective of the invention is to simplify the assembly process, and to reduce the logistics costs involved in shipping multiple heat exchangers separately.

### SUMMARY

The present invention relates to a heat exchanger assembly that comprises at least one first heat exchanger comprising at least one first fastening member and at least two second heat exchangers. Each second heat exchanger comprises at least one second fastening member. The second heat exchangers are mechanically connected to the first heat exchanger using the at least one first fastening member and the second fastening members. The at least one first heat exchanger is connected to and disposed between the at least two second heat exchangers. The at least two second heat exchangers are in fluidic communication with each other using at least one fluid connector.

Generally, the first fastening member of the first heat exchanger and the at least one second fastening member of the second heat exchangers are assembled with each other using a sliding connection.

Specifically, the heat exchanger assembly comprises a third fastening member disposed on at least one of the first heat exchanger and the second heat exchanger. The third fastening member is configured to restrict the relative sliding motion between the first heat exchanger and the second heat exchanger.

Specifically, the at least one first fastening member and the at least one second fastening members are snap-fit type fasteners.

Generally, the at least one first heat exchanger comprises at least one inlet port and at least one outlet port to allow fluid communication to and from the first heat exchanger.

Generally, the at least one second heat exchanger comprises at least one first port and at least one second port to allow fluid communication to and from the second heat exchanger.

Specifically, the at least one of the first port and the second port is received in at least one first fastening member.

More specifically, the at least one of the first port and the second port comprises a groove to accommodate the at least one first fastening member.

Generally, a heat exchanger module comprises the heat exchanger assembly. The heat exchanger module further comprises at least one frame. The first heat exchanger is mounted to the frame.

Specifically, the first heat exchanger comprises a first coupling member that is configured to be coupled with a second coupling member disposed on the frame.

Generally, the heat exchanger module comprises a fan module, a front housing and a rear housing.

### BRIEF DESCRIPTION OF DRAWINGS

FIG. 1 illustrates a schematic representation depicting a heat exchanger module in accordance with an embodiment of the present invention.
FIG. 2 illustrates an exploded view depicting elements of the heat exchanger module of FIG. 1.
FIG. 3 illustrates a perspective view depicting a heat exchanger assembly which is a part of the heat exchanger module of FIG. 1 in accordance with an embodiment of the present invention.
FIG. 4 illustrates an exploded view depicting elements of the heat exchanger assembly of FIG. 3.
FIG. 5 illustrates a perspective view of a first heat exchanger of the heat exchanger assembly of FIG. 3.
FIG. 6 illustrates another perspective view of the first heat exchanger of the heat exchanger assembly of FIG. 3.
FIG. 7 illustrates a perspective view of two second heat exchangers of the heat exchanger assembly of FIG. 3.
FIG. 8 illustrates a fluid connector of the heat exchanger assembly of FIG. 3.
FIG. 9 illustrates another perspective view of the heat exchanger assembly of FIG. 3.
FIG. 10 illustrates a perspective view of the first heat exchanger and a frame of the heat exchanger module of FIG. 1, before they have been assembled.
FIG. 11 illustrates a perspective view of the first heat exchanger and a frame of the heat exchanger module of FIG. 1, after they have been assembled. The figure further shows an enlarged view of the connection between the first heat exchanger and the frame.

### DETAILED DESCRIPTION

It must be noted that the accompanying figures disclose the invention in a detailed enough way to be implemented, said figures helping to better define the invention, if need be. The invention should however not be limited to the embodiments disclosed in the description.

The present invention envisages a heat exchanger module 1000 for a vehicle. For instance, the heat exchanger module 1000 is adapted to be mounted at the front end of a vehicle for exchanging heat with the ambient air.

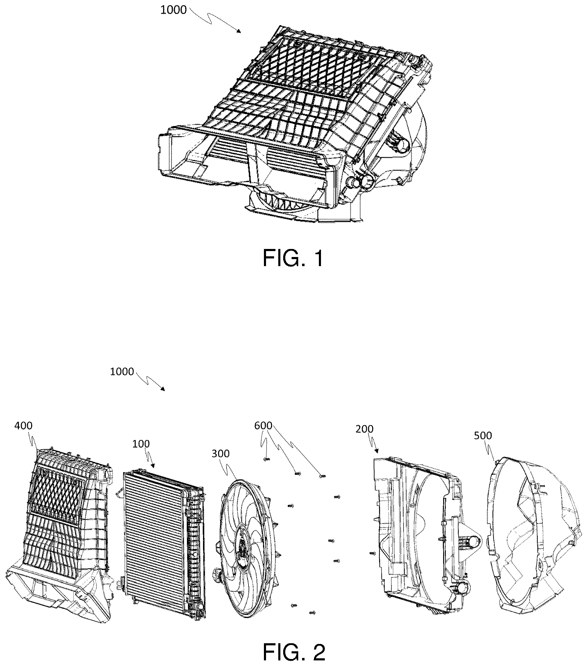

FIG. 1 illustrates an assembled form of the heat exchanger module 1000, while FIG. 2 illustrates an exploded view of the heat exchanger module 1000 depicting the individual components, thereof. The heat exchanger module 1000 comprises a heat exchanger assembly 100, a frame 200, a fan module 300, a front housing 400, a rear housing 500 and fasteners 600. The primary function of the heat exchanger assembly 100 is to exchange heat of the fluids flowing therein with the ambient air. The frame 200 is used to mechanically mount the heat exchanger assembly 100 to a vehicle. The fan module 300 draws the ambient air to be impinged on the heat exchanger assembly 100. The front housing 400 and the rear housing 500 form an enclosure that channelizes the incoming and outgoing air with respect to the heat exchanger assembly 100 and the fan module 300, while the fasteners 600 are used to fasten the front housing 400 and the rear housing 500 together.

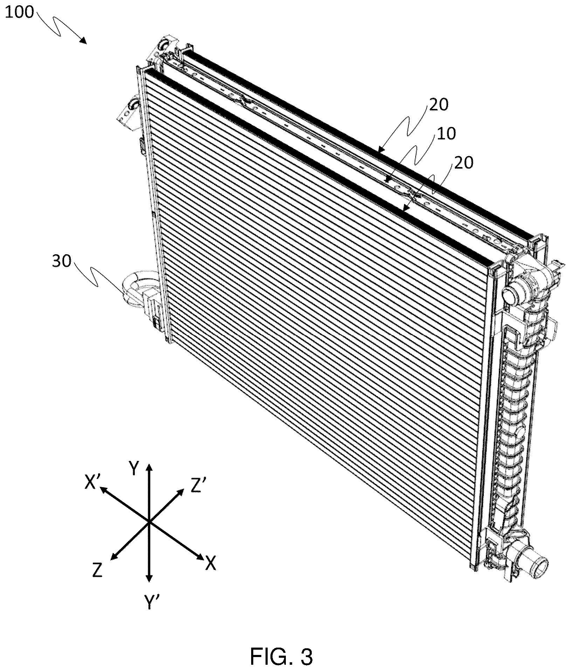

FIG. 3 illustrates parts of the heat exchanger assembly 100 in assembled condition according to an embodiment of the present invention. The figure depicts one first heat exchanger 10 juxtaposed with two second heat exchangers 20. The two second heat exchangers 20 are fluidically connected via a fluid connector 30. FIG. 3 further depicts the three axes directions XX', YY' and ZZ' for the heat exchanger assembly 100. As an arbitrary convention, the lateral length direction of the heat exchanger assembly 100 has been depicted as XX', the height direction of the heat exchanger 100 being YY' and the thickness direction of the heat exchanger 100 as ZZ'.

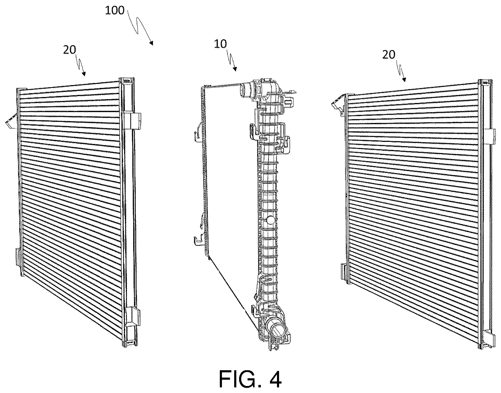

FIG. 4 shows an exploded view of the heat exchanger assembly 100 depicting the first heat exchanger 10 and the second heat exchangers 20. Generally, both the first heat exchanger 10 and the second heat exchangers 20 have internal fluid flow channels (not shown) for a fluid to flow therein to make it available for heat exchange with the air drawn in by the fan module 300.

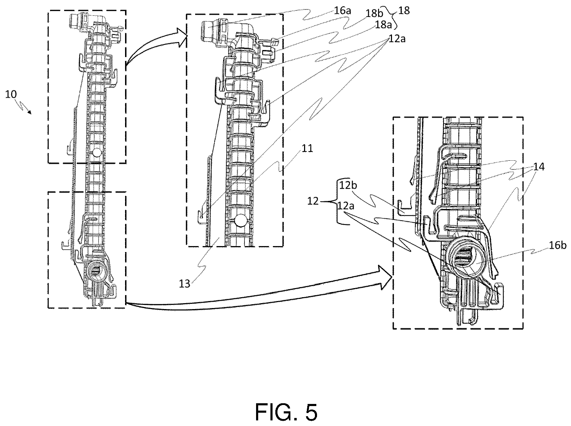

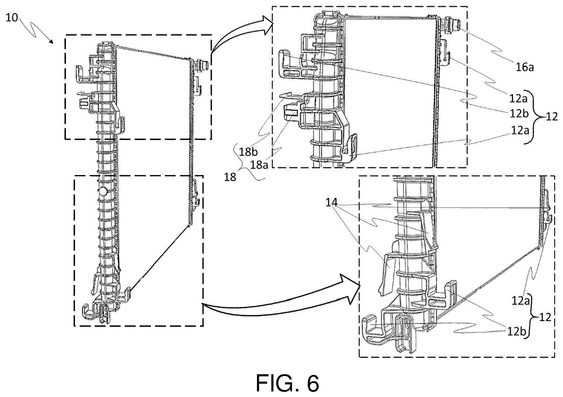

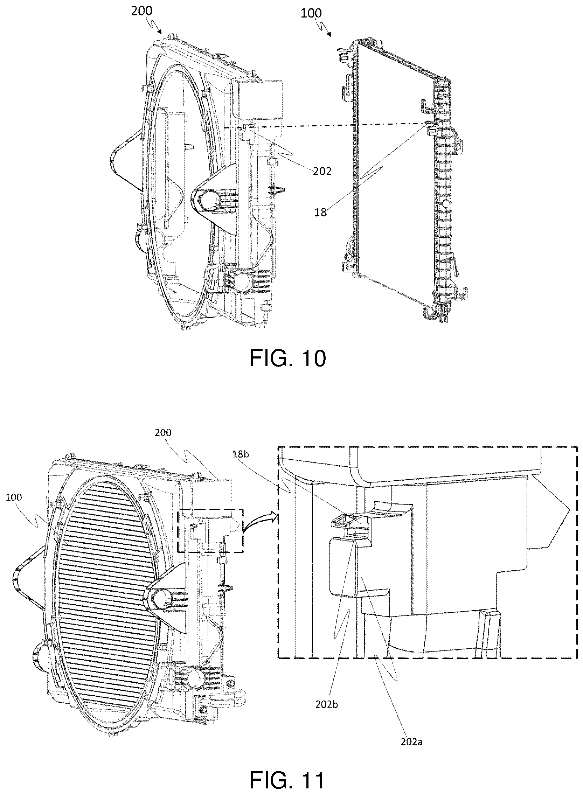

FIG. 5 and FIG. 6 illustrate the perspective views of a first heat exchanger 10 of the heat exchanger assembly 100 depicting the various parts thereof, according to a non-limiting embodiment of the invention. The first heat exchanger 10 comprises two manifolds 11 disposed on two opposite ends along the direction XX'. An inlet port 16a and an outlet port 16b are disposed on any one of the manifolds 11. The first heat exchanger 10 comprises a plurality of a first fastening members 12. The figure illustrates the first fastening members 12 further including one or more first fastening members of first type 12a having a narrow opening and one or more first fastening members of second type 12b having a wider opening. Each of the first fastening members of second type 12b has a horizontal portion (parallel to ZZ' direction) and a vertical portion (parallel to YY' direction) that define a U-shaped opening. The first heat exchanger 10 also includes one or more third fastening member 14 disposed on the manifolds 11 and adjacent to at least one of the first fastening members 12. The inlet port 16a and the outlet port 16b allow fluid communication into and out from of the first heat exchanger 10 through the manifold 11. A fluid, such as a coolant enters through the inlet port 16a and exits the first heat exchanger 10 through the outlet port 16b. FIG. 6 further depicts the first heat exchanger 10 that comprises a first coupling member 18 according to an embodiment of the present invention. The first coupling member 18 is used to mount the first heat exchanger 10 to the frame 200. The frame 200 comprises a second coupling member 202 (shown in FIG. 10) where the first coupling member 18 is coupled. The coupling member 18 further comprises a mounting portion 18a and a locking portion 18b (shown in FIG. 11).

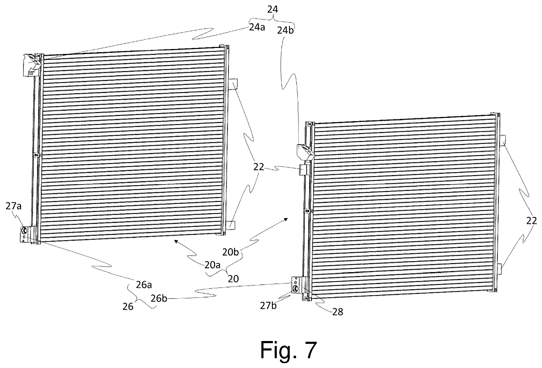

FIG. 7 illustrates a perspective view of the second heat exchangers 20 according to an embodiment of the present invention. For clarity of description, two second heat exchangers 20a and 20b have been depicted, however, the construction of the second heat exchangers 20a and 20b are substantially similar. The second heat exchangers 20a and 20b have second fastening members 22. The second fastening members 22 are adapted to be secured in the first fastening members 12 of the first heat exchanger 10. Each of the second heat exchangers 20 has at least one first port 24 and one second port 26. The second heat exchanger 20a comprises a first port 24a and a second port 26a, while the second heat exchanger 20b comprises a first port 24b and a second port 26b. The second ports 26a and 26b comprise an aperture 27a and 27b, respectively that are fluidically connected to the internal fluid flow channels (not shown) of the second heat exchangers 20a and 20b. Each of the second ports 26a and 26b comprises a groove 28.

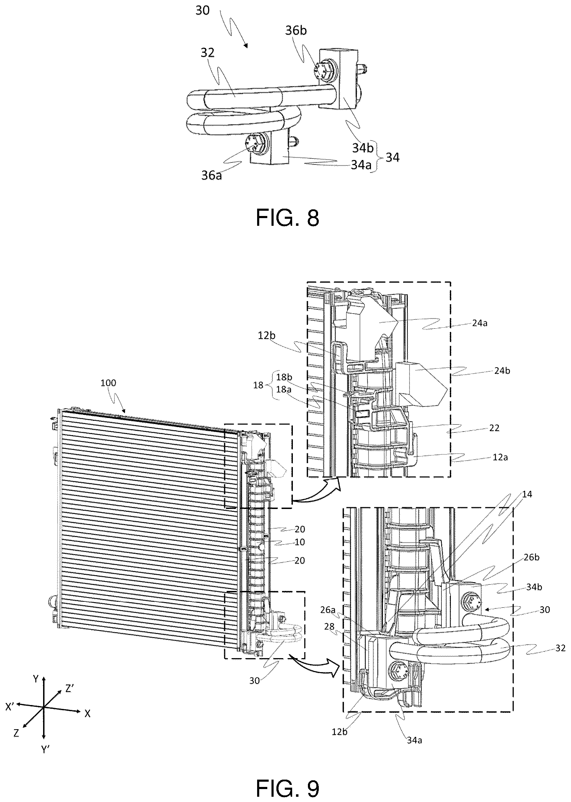

FIG. 8 illustrates a perspective view of a fluid connector 30 according to an embodiment of the present invention. The fluid connector 30 is used to fluidically connect the two second ports 26a and 26b. The fluid connector 30 comprises a connecting tube 32 adapted to carry fluid between the second heat exchangers 20a and 20b. The fluid connector 30 further comprises a first connection portion 34a, a second connection portion 34b (collectively referred to as connection portions 34). The first connection portion 34a and the second connection portion 34b are coupled to the second ports 26a and 26b, respectively using a first fastener 36a and a second fastener 36b (collectively referred to as fasteners 36), respectively.

FIG. 9 illustrates a perspective view of the heat exchanger assembly 100 showing the first heat exchanger 10, two second heat exchangers 26a and 26b, and the fluid connector 30. The first connection portion 34a is connected to the second port 26a of the second heat exchanger 20a using the first fastener 36a and the second connection portion 34b is connected to the second port 26b of the second heat exchanger 20b using the second fastener 36b. Thus, the fluid connector 30 fluidically connects the two second heat exchangers 20a and 20b. FIG. 9 also depicts that in an assembled state of the heat exchanger assembly 100, the third fastening member 14 of the second heat exchangers 20a and 20b rest on the two second ports 26a and 26b, respectively, to restrict the degree of freedom of the two second ports 26a and 26b and consequently the two second heat exchangers 20 with respect to the first heat exchanger 10 in the YY' direction. FIG.9 further depicts the groove 28 of the second port 26a that accommodates the first fastening members of second type 12b. Although not visible in FIG. 9, groove 28 is also present on the second port 26b that accommodates another first fastening members of second type 12b. Positioning of the first fastening members of second type 12b in the groove 28 restricts the degree of freedom of the second heat exchangers 20 with respect to the first heat exchanger 20 in the XX' direction. The second fastening members 22 are accommodated in the first fastening members of first type 12a to restrict the degree of freedom of the second heat exchangers 20 with respect to the first heat exchanger 10 in ZZ' direction. FIG. 9 further depicts that the first port 24a of the second heat exchanger 20a is accommodated in and supported in YY' and ZZ' direction by the first fastening members of second type 12b.

FIG. 10 and 11 illustrate perspective views of the mounting of the heat exchanger assembly 100 to the frame 200 in exploded and assembled form, respectively. FIG. 10 depicts that the first coupling member 18 of the first heat exchanger 10 of the heat exchanger assembly 100 is in alignment with the second coupling member 202 of the frame 200. FIG. 11 depicts an enlarged view of the assembled first heat exchanger assembly 100 and frame 200. The second coupling member 202 comprises a supporting member 202a and an aperture 202b. The supporting member 202a accommodates the mounting portion 18a of the first heat exchanger 10 and supports the weight of the heat exchanger assembly 100. The aperture 202b allows the locking portion 18b to be inserted therein to lock the heat exchanger assembly 100 to the frame 200.

In earlier solutions, the second heat exchanger 20a was mounted to the frame 200 while the second heat exchanger 20b was mounted to the first heat exchanger 10 (or vice versa). This created a tolerance stack-up and the connector 30 (which is a rigid part) was put under stress due to such tolerance stack-up and thus was a potential fracture point when subjected to vehicle vibrations. Hence, it is necessary to have an arrangement to reduce the tolerance stack-up and also reduce motion about all the degrees of freedom of the second heat exchangers with respect to each other and the first heat exchanger 20, especially the relative degree of freedom between the second ports 26a and 26b.

In a preferred embodiment as illustrated in FIG. 2, the heat exchanger module 1000 comprises the heat exchanger assembly 100 and the frame 200. Further, as illustrated in FIG. 3, the preferred embodiment of the heat exchanger assembly 100 comprises one first heat exchanger 10 and two second heat exchangers 20. The first heat exchanger 10 is disposed between and mechanically connected to the two second heat exchangers 20. Generally, both the first heat exchanger 10 and the second heat exchangers 20 have internal fluid flow channels (not shown) for a fluid to flow therein to make it available for heat exchange. For instance, the fluid flowing can be a coolant or a refrigerant. Usually, the fluids exchange heat with oncoming air encountered by the front end of the vehicle facilitated by the fan module 300. Further, as depicted in FIG. 5, the first heat exchanger 10 comprises one inlet port 16a and one outlet port 16b for inlet and outlet of the fluid to and from the first heat exchanger 10. For instance, the first heat exchanger 100 can be a radiator with a coolant fluid flowing through it, while the second heat exchangers 20 are usually condensers of a refrigerant loop with a refrigerant flowing within.

The first fastening members 12 are disposed on the manifolds 11 of the first heat exchanger 10. Preferably, each first fastening members 12 is in the form of a hook having a U-shaped opening. By way of example, as depicted in FIG. 5 and FIG. 6 each manifold 11 comprises four first fastening members 12. As described earlier, the first fastening members of first type 12a have narrower openings as compared to the openings of the first fastening members of second type 12b that have a wider opening. As shown in FIG. 7, preferably, the second fastening members 22 are of the shape of a rectangular plate whose thickness is adapted to fit in width of the opening of the first fastening members of first type 12a. Preferably, the second fastening members 22 of the second heat exchangers 20 mechanically connected with the first fastening members of first type 12a of the first heat exchanger 10 by sliding the second heat exchangers 20 with respect to the first heat exchanger 10 in YY' direction. Such a sliding motion inserts the second fastening members 22 into the U-shaped opening of first fastening members of first type 12a, restricting the degree of freedom of the second heat exchangers 20 with respect to the first heat exchanger 10 in the YY' direction and also in the ZZ' direction (both towards and away from the first heat exchanger 10). The relative sliding motion between the first heat exchanger 10 and the second heat exchanger 20 i.e. the degree of freedom of the second heat exchangers 20 with respect to the first heat exchanger 10 in the direction Y'Y (opposite to direction YY') is restricted by the third fastening members 14. For instance, the third fastening member 14 is a cantilever snap fit type fastener with an inclined surface. Alternatively, the fastening member can be a spring loaded detent having an inclined surface. During assembly, while sliding of the second heat exchangers 20 with respect to the first heat exchanger 10 in YY' direction, the second fastening members 22 contact the inclined surface of the third fastening member 14 and depress the same in ZZ' direction. As the second fastening member 22 is fully inserted into the opening of the first fastening members of first type 12a, the third fastening member 14 returns back to its original position and urges against the top surface (in ZZ' direction) of the second fastening member 22 restricting the degree of freedom of the second heat exchangers 20 with respect to the first heat exchanger 10 in Y'Y direction. The first port 24a and the second port 26a of the second heat exchanger 20a allow fluid to flow in to and out of (not necessarily in that order) the second heat exchanger 20a. Similarly, the first port 24b and the second port 26b of the second heat exchanger 20b allow fluid to flow in to and out of (not necessarily in that order) the second heat exchanger 20b. In one example, the fluid intended to flow in the second heat exchangers 20, first enters the second heat exchanger 20a through the first port 24a and exits the second heat exchanger 20a through the second port 26a, then flows through the fluid connector 30, enters the second heat exchanger 20b through the second port 26b and finally exits the heat exchanger assembly 100 through the first port 26a of the second heat exchanger 20b. Similarly, a reverse direction of flow of the fluid is also possible, starting at the first port 24b of the second heat exchanger 20b and ending at the first port 24a of the second heat exchanger 20a.

The first port 24a is disposed at the top (in Y'Y direction) of second heat exchanger 20a while the second port 26a is disposed on the bottom side of the second heat exchanger 20a (in YY' direction). For instance,the first port 24a and the second port 26a are located on the same side in XX' direction of the second heat exchanger 20a for packaging efficiency and to improve that the serviceability during maintenance procedures. The first port 24b is disposed at the top (in Y'Y direction) of second heat exchanger 20b while the second port 26b is disposed on the bottom side of the second heat exchanger 20b (in YY' direction). For instance, the first port 24b and the second port 26b are located on the same side of the second heat exchanger 20b in XX' direction for packaging efficiency and to improve that the serviceability during maintenance procedures. Preferably, the two second ports 26a and 26b are located on the same side of the heat exchanger in XX' direction to allow them to be in close proximity to each other and the fluid connector 30 fluidically connects the two second ports 26a and 26b and hence also fluidically connects the two second heat exchangers 20a and 20b. The first connection portion 34a of fluid connector 30 is fastened to the second port 26a of the second heat exchanger 20a using the first fastener 36a. Similarly, the second connection portion 34b of the fluid connector 30 is fastened to the second port 26b of the second heat exchanger 20b using the second fastener 36b. The connecting tube 32 fluidically connects apertures 27a and 27b of the second ports 26a and 26b, thus fluidically connecting the two second heat exchangers 20a and 20b, and more specifically fluidically connecting the internal fluid flow channels (not shown) of the two second heat exchangers 20a and 20b.

Each of the second ports 26a and 26b comprises a groove 28. The groove 28 accommodates the first fastening member of second type 12b. Specifically, the first fastening members of second type 12b has a horizontal portion (parallel to ZZ' direction) and a vertical portion (parallel to YY' direction). The horizontal portion of the first fastening members of second type 12b supports the second heat exchangers 20a and 20b in YY' direction. The vertical portion of the first fastening members of second type 12b is accommodated in the groove 28 and thus restricts the degree of freedom of the second ports 26a and 26b, and consequently the two second heat exchangers 20a and 20b in the XX' direction. During assembly, while sliding of the second heat exchangers 20 with respect to the first heat exchanger 10 in YY' direction, the second ports 26a and 26b contact the inclined surface of the third fastening member 14 and depress the same in ZZ' direction. As the second ports 26a and 26b are fully inserted into the opening of the first fastening members of second type 12b, the third fastening member 14 returns back to its original position and urges against the top surface (in ZZ' direction) the second ports 26a and 26b firmly restricting the degree of freedom of both the second ports 26a and 26b and thereby also the degree of the second heat exchangers 20 with respect to the first heat exchanger 10 in Y'Y direction. Thus, all three degrees of freedom along the three directions XX', YY' and ZZ' are effectively mitigated. As a result the fluid connector 30 which is a rigid connector, does not suffer from stresses due to relative motion between the first heat exchanger 10 and the second heat exchangers 20 arising from vehicle vibrations, thus mitigating any possible fracture and leakages of the fluid connector 30.

One first coupling member 18 is disposed on each of the two manifolds 11 of the first heat exchanger 10. The coupling member 18 is used to mount the first heat exchanger 10 to the frame 200. The frame 200 comprises a second coupling member 202 where the first coupling member 18 is coupled. Specifically, the supporting member 202a of second coupling member 202 accommodates the mounting portion 18a of the first heat exchanger 10 and supports the weight of the heat exchanger assembly 100. The aperture 202b of the second coupling member 202 allows the locking portion 18b to be inserted therein to lock the heat exchanger assembly 100 to the frame 200. Preferably, the locking portion 18b is of a cantilever snap fit type fastener.

In an alternative embodiment not illustrated, at least one of the first fastening members 12 and the second fastening members 22 are of snap-fit type fastener. In one implementation of this embodiment, the first heat exchanger 10 may have a cantilever snap fit element (similar to the locking portion 18) while the second heat exchangers 20 may have an engaging feature (similar to the second coupling member 202), or vice versa.

In an embodiment as illustrated in FIG. 9, at least one of the first port 24a and 24b is received in the first fastening member of first type 12a and the first fastening member of first type 12b. By way of example, at least one of the first port 24a and the first port 24b is accommodated in and supported in YY' and ZZ' direction by the first fastening members of second type 12b. Each of the first fastening members of second type 12b has a horizontal portion (parallel to ZZ' direction) and a vertical portion (parallel to YY' direction) that define a U-shaped opening that is wide enough to accommodate the first port 24a or the first port 24b.

In an alternate embodiment not illustrated, the first fastening members 12 are of the shape of a rectangular plate while the second fastening members 22 are of the shape of a hook. In such an embodiment, the third fastening member 14 is disposed on the second heat exchanger 20.

In the preferred embodiment, as illustrated in FIG.5 and FIG. 6 the third fastening members 14 are employed with the first fastening members 12 that are placed at the lower part of the first heat exchanger 10 (lower part refers to where the second port 26 are present). This primarily acts to effectively restrict the relative motion between the first heat exchanger 10 and the second heat exchangers 20 in YY' direction at the lower part where the second ports 26a, 26b are located. Thus, it reduces the relative motion between the two second ports 26a, 26b is restricted in YY' direction. However, it must be appreciated that without limitation, the fastening members 14 may also be employed with the first fastening members 12 located at the top part of the first heat exchanger 10, without departing from the scope of the invention.

The directions XX', YY' and ZZ' have been defined in this description for the sake of explaining the correlation between different parts of the system as proposed by the present invention. A person skilled in the art will appreciate that the heat exchanger module 1000, as described in the various embodiments discussed above, may be used in any orientation and in such a case, the directions XX', YY', ZZ', the terms top, bottom, side, lateral, longitudinal, or the like may suitably change without compromising the essence of the invention and such change of orientation does not depart from the scope of the invention.

## Claims

1. A heat exchanger assembly (100) comprising:
at least one first heat exchanger (10) comprising at least one first fastening member (12);
at least two second heat exchangers (20) each comprising at least one second fastening member (22) wherein,
the second heat exchangers (20) are mechanically connected to the first heat exchanger (10) using the at least one first fastening member (12) and
the second fastening members (22),
**characterized in that** the at least one first heat exchanger (10) is connected to and disposed between the at least two second heat exchangers (20) wherein the at least two second heat exchangers (20) are in fluidic communication with each other using at least one fluid connector (30).

2. The heat exchanger assembly (100) according to claim 1 wherein the first fastening member (12) of the first heat exchanger (10) and the at least one second fastening member (22) of the second heat exchangers (20) are assembled with each other using a sliding connection.

3. The heat exchanger assembly (100) according to any one of the preceding claims, comprising a third fastening member (14) disposed on at least one of the first heat exchanger (10) and the second heat exchanger (20), the said third fastening member (14) being configured to restrict the relative sliding motion between the first heat exchanger (10) and the second heat exchanger (20).

4. The heat exchanger assembly (100) according to any one of the preceding claims wherein the at least one first fastening member (12) and the at least one second fastening members (22) are snap-fit type fasteners.

5. The heat exchanger assembly (100) according to any one of the preceding claims wherein the at least one first heat exchanger (10) comprises at least one inlet port (16a) and at least one outlet port (16b) to allow fluid communication to and from the first heat exchanger (10).

6. The heat exchanger assembly (100) according to any one of the preceding claims wherein the at least one second heat exchanger (20) comprises at least one first port (24) and at least one second port (26) to allow fluid communication to and from the second heat exchanger (20).

7. The heat exchanger assembly (100) according to any one of the preceding claims wherein the at least one of the first port (24) and the second port (26) is received in at least one first fastening member (12).

8. The heat exchanger assembly (100) according to any one of the preceding claims wherein at least one of the first port (24) and the second port (26) comprises a groove (28) configured to accommodate the at least one first fastening member (12).

9. A heat exchanger module (1000) comprising the heat exchanger assembly (100) as claimed in any one of the preceding claims, wherein the heat exchanger module (1000) further comprises at least one frame (200), wherein the first heat exchanger (100) is mounted to the frame (200).

10. The heat exchanger module (1000) according to the preceding claim wherein the first heat exchanger (10) comprises a first coupling member (18) configured to be coupled with a second coupling member (202) disposed on the frame (200).

11. A heat exchanger module (1000) according to any one of the claims 8 to 9, comprising a fan module (300), a front housing (400) and a rear housing (500).
